Europäisches Patentamt

European Patent Office

Office européen des brevets

(19)

(11) **EP 0 632 923 B1**

(12) **EUROPÄISCHE PATENTSCHRIFT**

(45) Veröffentlichungstag und Bekanntmachung des Hinweises auf die Patenterteilung:
**01.05.1996 Patentblatt 1996/18**

(21) Anmeldenummer: **93906566.0**

(22) Anmeldetag: **19.03.1993**

(51) Int Cl.6: **G21G 1/06**, H05H 1/22, C01B 4/00

(86) Internationale Anmeldenummer:
**PCT/EP93/00671**

(87) Internationale Veröffentlichungsnummer:
**WO 93/19474 (30.09.1993 Gazette 1993/24)**

(54) **IM WESENTLICHEN SPHÄRISCHE PARTIKEL AUS LITHIUMSILIKATEN MIT VERBESSERTEN MECHANISCHEN EIGENSCHAFTEN UND VERBESSERTER OBERFLÄCHENBESCHAFFENHEIT**

SUBSTANTIALLY SPHERICAL PARTICLES MADE OF LITHIUM SILICATES HAVING IMPROVED MECHANICAL PROPERTIES AND SURFACE QUALITY

PARTICULES SENSIBLEMENT SPHERIQUES EN SILICATES DE LITHIUM A PROPRIETES MECANIQUES ET A ETAT DE SURFACE AMELIORES

(84) Benannte Vertragsstaaten:
**DE FR GB IT**

(30) Priorität: **24.03.1992 DE 4209420**

(43) Veröffentlichungstag der Anmeldung:
**11.01.1995 Patentblatt 1995/02**

(73) Patentinhaber:
- **Schott Glaswerke
  D-55122 Mainz (DE)**
- **KERNFORSCHUNGSZENTRUM KARLSRUHE GMBH
  D-76021 Karlsruhe (DE)**

(72) Erfinder:
- **DALLE DONNE, Mario
  D-7513 Stutensee 2 (DE)**
- **SCHUMACHER, Gustav
  D-7500 Karlsruhe 21 (DE)**
- **GEILER, Volkmar
  D-6500 Mainz 21 (DE)**
- **CLEMENT, Marc
  D-6500 Mainz (DE)**
- **SPEIT, Burkhart
  D-6500 Mainz 21 (DE)**

(74) Vertreter: **Fuchs, Luderschmidt & Partner Patentanwälte
Postfach 46 60
D-65036 Wiesbaden (DE)**

(56) Entgegenhaltungen:
**DE-A- 3 742 023**

- **FUSION ENGINEERING AND DESIGN Bd. 17, Dezember 1991, AMSTERDAM NL, Seiten 31-36, G. SCHUMACHER: "Improvement of the mechanical stability of lithium-orthosilicate pebbles"**
- **FUSION ENGINEERING AND DESIGN Bd. 17, Dezember 1991, AMSTERDAM NL, Seiten 65-71; W. Krug: "Inpile tritium release from ceramic breeder materials"**

## Beschreibung

Technisches Gebiet

Die Erfindung betrifft im wesentlichen sphärische Partikel aus Lithiumsilikaten, bei denen durch spezielle Zusätze, die im kennzeichnenden Teil des Patentanspruchs 1 definiert sind, insbesondere die mechanichen Eigenschaften deutlich verbessert sind, ohne daß die Eigenschaft des Partikelmaterials, nach Neutronenbeschuß Tritium freizusetzen ("Release"), ungünstig beeinflußt wird, so daß sie vorteilhafterweise als Brutmaterial für Tritium Verwendung finden können.

Stand der Technik

Lithiumsilikate sind eine Möglichkeit, das in der Kernfusionstechnik benötigte Tritium direkt im Reaktor herzustellen. Dabei fängt das im Lithiumsilikat vorhandene $^6_3$Li die beim Fusionsprozeß entstehenden Neutronen ein und wandelt sich in einer Kernreaktion zu Helium und Tritium um (Brutreaktion):

$$^6_3\text{Li} + {}^1_0\text{n} \longrightarrow {}^4_2\text{He} + {}^3_1\text{T} \tag{1}$$

Das entstehende Tritium wird dann im Reaktor in einem Plasma in der Kernfusionsreaktion eingesetzt (Fusionsreaktion) und setzt dabei Neutronen frei, die wiederum für die Brutreaktion verwendet werden können:

$$^3_1\text{T} + {}^2_1\text{D} \longrightarrow {}^4_2\text{He} + {}^1_0\text{n} + \text{Energie} \tag{2}$$

Das für die Brutreaktion notwendige $^6_3$Li kann in verschiedenen Formen bereitgestellt werden, so zum Beispiel als Lithiumsilikat, wobei Lithiumorthosilikat bevorzugt wird (vgl. Fusion Technology, 1990, Seite 978).

Bei festen Lithiumträgern gibt es eine Reihe von Möglichkeiten, diese in einem Festbett anzuordnen (vgl. E. Proust et al, 2nd Int. Symp. on Fus. Technol., Karlsruhe, June 2-7, 1991), wobei die Anordnung als Kugelbett nur eine Möglichkeit darstellt.

Wird die Möglichkeit als Kugelbett für einen Fusionsreaktor als Anordnung gewünscht, so können die Partikel direkt aus der Schmelze nach einem der bekannten Verfahren (Sprühverfahren, Schleuderverfahren u. dgl.) in einer Größe bis zu einigen 1000 μm hergestellt werden.

Normalerweise werden bei Herstellungsverfahren, bei denen sphärische Partikel direkt aus der Schmelze hergestellt werden, Mikrorisse und Hohlräume beobachtet, die bis zu etwa 10-20 % der produzierten Partikel betreffen können. Diese Partikel werden als fehlerhaft eingestuft, da sie nur eine geringe mechanische Belastbarkeit besitzen. Beispielsweise sinkt die maximale Druckbelastung solcher Partikel aus Lithiumorthosilikatpartikeln von 8 Newton auf 2 Newton, wenn die vorgenannten Fehler auftreten (vgl. J. Nucl. Mater., 155-57 (1988), 451). Da die fehlerhaften Partikel statistisch unter den fehlerfreien Partikeln verteilt sind, besitzt die Gesamtheit aller Partikel eine erhebliche Streuung in den mechanischen Eigenschaften. Zum Nachweis der mechanischen Belastbarkeit dient die weiter unten beschriebene Druckprüfung.

Werden die Partikel im Einsatz einer ständig wechselnden Temperatur- und Druckbeanspruchung unterworfen, so kann ein Teil zerstört und damit die Eignung infrage gestellt werden. Dieser Fall ist gegeben, wenn die Partikel als Brutmaterial für Tritium in einem Fusionsreaktor eingesetzt werden. Ihre Eignung als Brutmaterial wird durch den weiter unten beschriebenen Thermozykliertest ermittelt.

Mit bekannten sphärischen Lithiumsilikaten durchgeführte Simulationsversuche für die Temperatur- und Druckbelastung eines Kugelbetts im Blanket eines Fusionsreaktors zeigen, daß bis zu 10 % der eingesetzten Partikel der Beanspruchung nicht standhalten und zerbrechen (vgl. Fusion Technology, 1990, S. 822). Hierbei handelt es sich vor allem um die o.g. fehlerhaften Partikel.

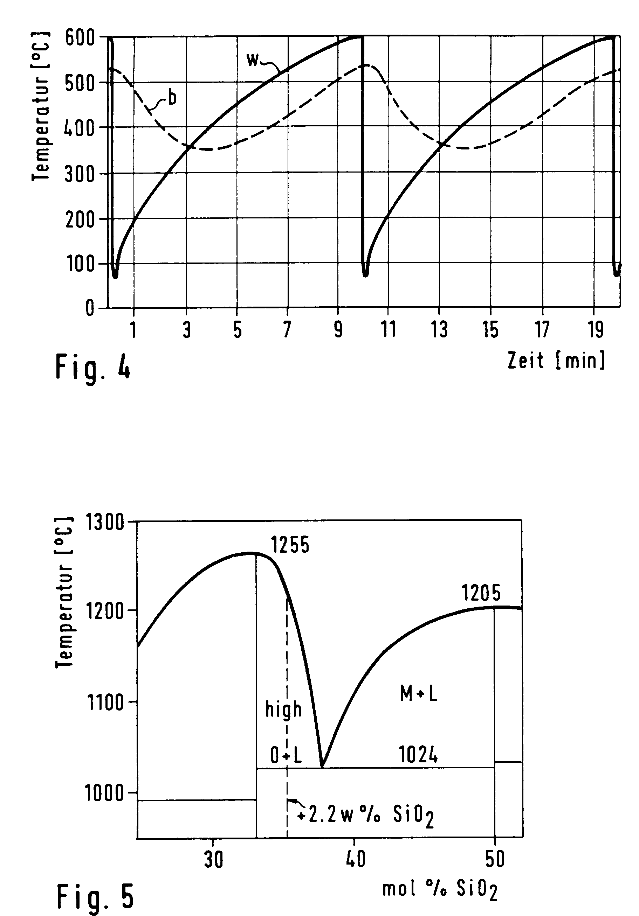

Versuche mit Zusätzen an Silicium zum Lithiumorthosilikat und/oder -verbindungen sowie Aluminium und/oder -verbindungen wurden schon mehrfach im Labormaßstab durchgeführt; sie führten zwar zu Verbesserungen, jedoch waren diese nur nach einer Nachbehandlung unter exakt definierten Bedingungen zu erzielen (vgl. Fusion Technology, 1990, S. 822). Die Nachbehandlung besteht darin, daß die Kugeln aus Li-Orthosilikat in einem Drehrohrofen exakt auf eine Temperatur von 1030°C erhitzt und dann schnell wieder unter 1024°C abgekühlt werden. Die Zeit bei Temperaturen über 1024°C, bei der die Si-reiche Phase flüssig wird (vgl. Fig. 5), darf dabei nicht mehr als 5 Minuten betragen, da die Kugeln sonst miteinander verschmelzen würden. Kugeln, welche die so definierten kritischen Bedingungen nicht erreichen, erfahren keine Verbesserung der mechanischen Eigenschaften. Eine Verwirklichung dieser exakten Bedingungen im großen Maßstab ist deshalb äußerst schwierig.

In "Fusion Engineering and Design", Band 17, Dezember 1991, S. 31-36 werden Untersuchungen zur Verbesserung der mechanischen Stabilität von Lithiumorthosilikat-Kugeln beschrieben. Dabei heißt es, daß das kurzzeitige Erhitzen der Kugeln über 1.024°C zur Heilung von Mikrocracks und Kristallisation führt, wenn das Orthosilikat hinsichtlich Siliciumdioxid hyperstöchiometrisch ist, wobei ein Überschuß von 2,2 % Siliciumdioxid über die stöchiometrische Zusammensetzung genannt wird.

Darstellung der Erfindung

Der Erfindung liegt die Aufgabe zugrunde, die mechanischen und Oberflächeneigenschaften von als Brutmaterial für die Kernfusion geeigneten sphärischen Partikel aus Lithiumsilikaten, die gegebenenfalls bis zu 5 Gew.-% Aluminium und/oder Silicium und/oder deren Verbindungen als Zusätze enthalten, zu optimieren und die Zahl fehlerhafter Partikel auf ein Minimum herabzusetzen, wobei die Bruteigenschaften möglichst nicht beeinträchtigt werden sollten, d.h. die Tritiumfreisetzung möglichst unbeeinflußt bleiben soll.

Die Aufgabe wird erfindungsgemäß dadurch gelöst, daß dem Lithiumsilikat Zusätze von Tellur und/oder -verbindungen zugesetzt werden. Als Lithiumsilikat wird bevorzugt Lithiumorthosilikat eingesetzt.

Die erfindungsgemäßen Partikel können in an sich bekannter Weise direkt aus der Schmelze hergestellt werden. Andere bekannte Herstellungsverfahren als direkt aus der Schmelze zur Herstellung eines Festbettes sind ebenfalls möglich.

Die Partikel, die in der Kernfusionstechnik als Brutmaterial verwendet werden, können außer als Kugeln auch noch in anderen Formen (Pulver, Platten, Preßlinge etc.) vorliegen. Aus diesem Grund ist die Erfindung auch nicht ausschließlich auf sphärische Partikel beschränkt, sondern schließt Partikel mit ein, die bis zu einem gewissen Grad asphärisch sind.

Die Zusätze gemäß der Erfindung bewirken, daß einerseits die Neigung zur Bildung von Mikrorissen und Hohlräumen in den Partikeln stark herabgesetzt wird, und andererseits deren Oberflächenrauhigkeit deutlich verringert wird. Dadurch werden geringere Strenungen in den mechanischen und physikalischen Eigenschaften der Partikel festgestellt und die mechanische Festigkeit insgesamt in unerwartetem Ausmaß erhöht, wie die nachfolgenden Vergleichsversuche zeigen.

Dabei spielt es keine Rolle, ob mit $^6_3$ Li an- oder abgereicherte Lithiumsilikate verwendet werden.

Diese vorteilhaften Eingenschaften bleiben selbst dann erhalten, wenn die Partikel nach dem Herstellungsprozeß noch einer Temperung unterworfen werden.

Die mechanischen Eigenschaften der erfindungsgemäßen Lithiumsilikate sind so gut, daß sie auch in anderen Gebieten der Technik, z.B. in Kugellagern u. dgl., eingesetzt werden können. Für solche Anwendungen werden selbstverständlich sphärische Partikel mit größeren Abmessungen als für die Anwendung in Fusionsreaktoren eingesetzt.

Wege zur Ausführung der Erfindung

Beispiel

Es wurden jeweils 10 Kugeln einer Teilchengröße von 0,5 mm der Proben A bis D bekannter Zusammensetzung, die zum Vergleich dienten, und der Proben E und F von erfindungsgemäßer Zusammensetzung der im folgenden näher beschriebenen Druckprüfung unterzogen.

Die Proben wurden direkt aus der Schmelze hergestellt. Dazu werden Gemenge aus den in der Technik bekannten Verbindungen der Materialkomponenten hergestellt (z.B. $Li_2CO_3$, $SiO_2$, $TeO_2$) und bei 1380°C bis 1400°C in korrosionsbeständigen Schmelzgefäßen eingeschmolzen. Für die Herstellung des Gemenges werden für die Einbringung des Li-Anteils zweckmäßigerweise solche Verbindungen gewählt, die einen gewissen Anteil des Isotops $^6$Li enthalten, wobei bezüglich des Schmelzverhaltens und der Formgebung des Materials kein Einfluß festzustellen ist, wie hoch der Anteil des Lithiumisotops $^6$Li im Ausgangsstoff ist. Es können allerdings auch solche Lithiumverbindungen gewählt werden, in denen der $^6$Li-Anteil dem normalen handelsüblichen Anteil entspricht. Die Kugelherstellung geschieht durch Zerstäubung des austretenden Glasstrahls nach dem in US-PS 3,294,511 beschriebenen Verfahren, auf deren Offenbarung Bezug genommen wird. Der austretende flüssige Schmelzstrom hat dabei eine Temperatur von mindestens 1370°C bis 1400°C und einen Durchmesser von 1 bis 5 mm. Zur Zerstäubung des Schmelzstromes wird im Unterschied zum in der oben genannten Schrift ein kalter Druckluftstrom verwendet, dessen Geschwindigkeit am Austrittspunkt zwischen 50 m/s und 300 m/s beträgt. In der Zerstäubungskammer herrscht eine Temperatur zwischen 30°C und 500°C. Die in der Tabelle angegebenen verschiedenen Materialzusammensetzungen wurden durch entsprechende Gemengezusammensetzungen erreicht.

Die nachstehend beschriebenen Proben A bis F wurden als Rohgemenge bei den vorstehend beschriebenen Temperaturen aufgeschmolzen und die erhaltene Schmelze dann der ebenfalls vorstehend beschriebenen Zerstäubungsbehandlung unterzogen.

Die Vergleichsproben A und B bestanden aus reinem Lithiumorthosilikat, C und D aus Lithiumorthosilikat, das auf 100 Gew.-Teile zusätzlich 2,2 Gew.-Teile $SiO_2$ enthält.

Die Proben E und F gemäß der Erfindung bestanden aus Lithiumorthosilikat, das auf 100 Gew.-Teile zusätzlich 2,2 Gew.-Teile $SiO_2$ und 0,5 Gew.-Teile Te enthält.

Die Proben wurden sowohl in unbehandeltem Zustand (Proben A, C und E) als auch nach einem Nachglühen im Drehrohrofen (Proben B, D und F) der Druckprüfung unterworfen.

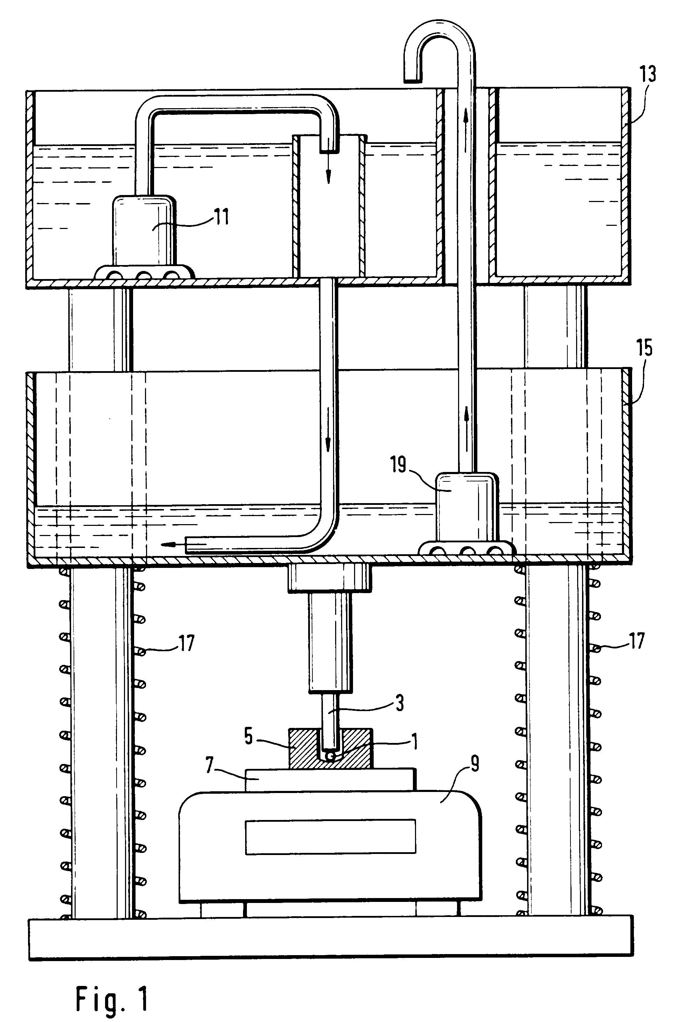

Die mechanische Belastbarkeit der Partikel wurde mit einem eigens hierfür gebauten Apparat geprüft, der in Fig. 1 dargestellt ist. Die zu testende Li-Orthosilikat-Kugel wird hierin durch einen Kolben gegen eine Unterlage gedrückt, die auf der Wägeschale einer Mikrowaage befestigt ist. Die Waage zeigt das tatsächliche Gewicht, das während des Tests auf der Kugel lastet. Durch Einlassen von Wasser in den Behälter, an dem der Kolben befestigt ist, wird der Druck der auf der Kugel lastet, allmählich gesteigert, bis die Kugel bricht. Diese Bruchlast dient als Maß für die mechanische Stabilität der Kugeln.

Die Ergebnisse der Druckprüfung sind in Tab. 1 angeführt. Hieraus ist zu ersehen, daß die Kugeln der erfindungsgemäßen Zusammensetzung auch ohne Nachbehandlung eine stark verminderte Streuung der mechanischen Eigenschaften aufweisen, wobei die Druckfestigkeit unerwarteterweise um bis zu 30 % erhöht ist.

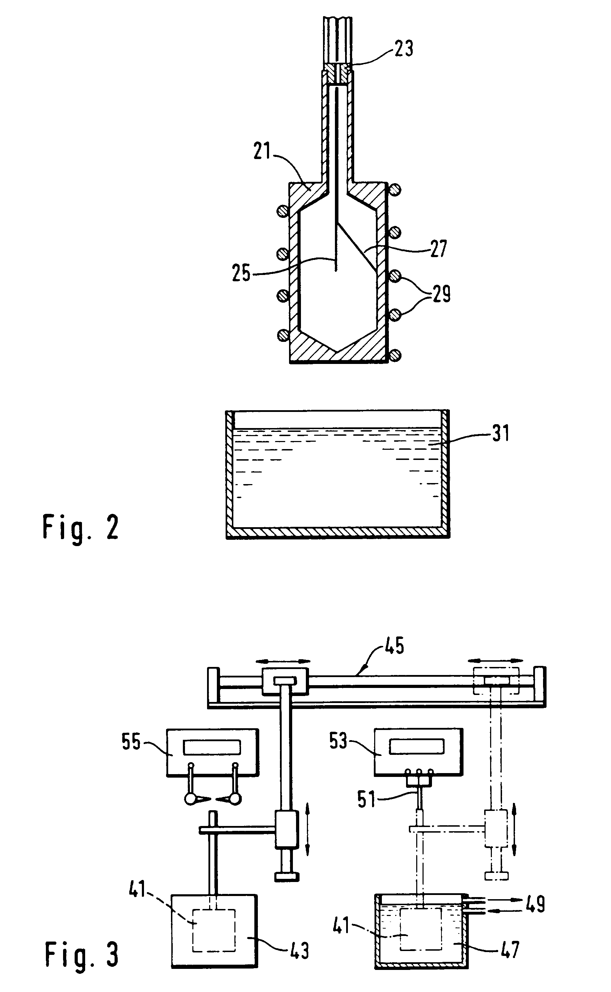

Bei der Eignungsprüfung der Partikel als Brutmaterial für Tritium wurden Partikelbetten dem sogenannten Thermozykliertest unterworfen, der die thermische und mechanische Beanspruchung im Blanket des Fusionsreaktors simuliert. Die Partikel werden hierbei in dichter Packung unter Vibration in einen Behälter eingefüllt, der mit zwei Thermoelementen ausgerüstet ist, von denen eines im Zentrum des Partikelbetts, das andere an der Behälterwand angebracht ist (Fig. 2). Der Behälter wird während des Tests durch Induktion erhitzt, bis die Wand eine Temperatur von 600°C erreicht. Diese Temperatur wird wird aufrechterhalten, bis die Temperatur im Zentrum des Partikelbetts einen Wert zwischen 530 und 600°C annimmt. Dann wird der Behälter im Wasser abgeschreckt, so daß die Temperatur in der Behälterwand unter 100°C sinkt. Das ist der Augenblick, in dem die höchste mechanische und thermische Spannung auf dem Partikelbett lastet, da die Temperatur im Zentrum des Betts noch bei ca. 500°C liegt. Die Tests werden zunächst mit 10 Zyklen manuell unter Verwendung des Behälters gemäß Fig. 2 durchgeführt und später in einer automatischen Einrichtung (Fig. 3), die eine größere Anzahl von Zyklen erlaubt, fortgesetzt. Ein typischer Temperaturverlauf während des Tests ist aus Fig. 4 zu ersehen.

Die Ergebnisse des Thermozykliertests sind in Tabelle 2 enthalten.

Sie zeigen, daß die erfindungsgemäßen sphärischen Partikel gegenüber den Partikeln gemäß dem Stand der Technik widerstandsfähiger gegen die mechanischen und thermischen Spannungen sind, wie sie beim thermischen Zyklieren des Reaktors in den Blanketkanistern auftreten, sei es im ursprünglichen Zustand oder nach Glühen im Drehrohrofen, wobei im ersteren Fall die erreichte prozentuale Verbesserung gegenüber Zusätze an $SiO_2$ enthaltenden Vergleichsproben am eklatantesten ist.

Durch Neutronenbestrahlungsversuche wurde nachgewiesen, daß die Freisetzung von Tritium aus den Partikeln durch den Zusatz von 0,5 Gew.-% Te unbeeinflußt blieb.

Tabelle 1

| Lasten [N], bei welchen die einzelnen Kugeln (0,5 mm Durchmesser) brachen und Bruchlasten FL [N] (Mittelwerte aus 10 Messungen) (Kugeln aus reinem Lithiumorthosilikat bzw. Lithiumorthosilikat + Zusätze) | | | | | | |
|---|---|---|---|---|---|---|
| **Versuch Nr.** | | | | | | |
| Probe | 1 | 2 | 3 | 4 | 5 | 6 |
| A rein, o | 2,7 | 2,7 | 2,7 | 2,7 | 3,5 | 3,9 |
| B rein, d | 1,6 | 5,4 | 3,6 | 2,5 | 0,6 | 0,2 |
| C +SiO$_2$, o | 3,5 | 5,7 | 11 | 11 | 6,2 | 5,0 |
| D +SiO$_2$, d | 7,0 | 4,8 | 8,5 | 9,8 | 6,9 | 10 |
| E +SiO$_2$, Te,o | 12 | 13 | 7,0 | 6,0 | 8,0 | 12 |
| F +SiO$_2$, Te,d | 5,0 | 11 | 9,5 | 12 | 10 | 10 |
| **Versuch Nr.** | | | | | | |
| Probe | 7 | 8 | 9 | 10 | | FL |
| A rein, o | 2,5 | 1,8 | 3,3 | 3,6 | | 2,9 |
| B rein, d | 3,0 | 3,2 | 4,3 | 3,8 | | 2,8 |
| C +SiO$_2$, o | 3,4 | 12 | 5,4 | 9,0 | | 7,2 |
| D +SiO$_2$, d | 6,3 | 9,0 | 7,0 | 7,9 | | 7,7 |
| E +SiO$_2$, Te,o | 13 | 11 | 11 | 13 | | 10,6 |
| F+SiO$_2$, Te,d | 10 | 8,9 | 11 | 11 | | 9,8 |

o = original (wie hergestellt)
d = Nachglühung im Drehrohrofen

Zusatz von $SiO_2$ = 2,2 Gew.%, von Te = 0,5 Gew.-%
Proben A bis D: Stand der Technik; Proben E und F: erfindungsgemäß

Tabelle 2

| Ergebnisse der Simulation mechanischer und thermischer Spannungen im Blanket (Thermozykliertest) mit Kugeln eines Durchmessers von 0,45 - 0,56 mm | | | |
|---|---|---|---|
| Material | Zusammensetzung | % Bruch | % Feinanteil* |
| 86/1 o (V) | +2,2 Gew.-% $SiO_2$ | 11 | 0,02 |
| 86/1 a (V) | dto. | 2 | 0,02 |
| 89/1 o (V) | $Li_4SiO_2$ | 6 | 0,12 |
| 89/1 a (V) | dto. | 10 | 0,05 |
| 90/1 o (V) | +2,2 Gew.-% $SiO_2$ | 6,0 | ** |
| 90/1 d (V) | + 2,2 Gew.-% $SiO_2$ | 1,4 | ** |
| 90/5 o (E) | + 2,2 Gew.-% $SiO_2$ +0,5 Gew.% Te | 4,2 | ** |
| 90/5 d (E) | dto. | 1,2 | ** |
| * Partikel < 0,05 mm | | | |
| ** vernachlässigbar | | | |

o = wie hergestellt
d = geglüht im Drehrohrofen
a = geglüht im stationären Ofen
V = Vergleich
E = erfindungsgemäß

Die Unterschiede der Testergebnisse zwischen den Vergleichsproben 86/1 und 90/1 beruhen auf einer gegenüber dem Stand der Technik verbesserten Herstellungstechnologie für letztere.

Bei der Vergleichsprobe ohne $SiO_2$-Überschuß (89/1) führte, wie aus Tabelle 2 ersichtlich, das Glühen zu einer Verschlechterung der mechanischen Eigenschaften aufgrund starken Kristallwachstums.

**Patentansprüche**

1. Im wesentlichen sphärische Partikel aus Lithiumsilikaten mit verbesserten mechanischen Eigenschaften und verbesserter Oberflächenbeschaffenheit, dadurch gekennzeichnet, daß sie Zusätze von Tellur und/oder Tellurverbindungen enthalten, wobei diese Zusätze bis zu 5 Gew.-% betragen.

2. Partikel nach Anspruch 1, dadurch gekennzeichnet, daß sie zusätzlich bis zu 5 Gew.-% Aluminium und/oder Alluminiumverbindungen und/oder Silicium und/oder Siliciumverbindungen enthalten.

3. Partikel nach Anspruch 1 oder 2, dadurch gekennzeichnet, daß sie 0,5 Gew.-% Tellur und/oder Tellurverbindungen enthalten.

4. Partikel nach Anspruch 3, dadurch gekennzeichnet, daß sie zusätzlich 2,2 Gew.-% $SiO_2$ enthalten.

5. Partikel nach einem der Ansprüche 1 bis 4, dadurch gekennzeichnet, daß das Lithiumsilikat als Lithiumorthosilikat eingesetzt ist.

**Claims**

1. Substantially spherical particles of lithium silicates having improved mechanical properties and surface quality, characterised in that they contain additions of up to 5 wt-% tellurium and/or tellurium compounds.

2. Particles according to Claim 1, characterised in that they contain additionally up to 5 wt-% aluminium and/or aluminium compounds and/or silicon and/or silicon compounds.

3. Particles according to Claim 1 or 2, characterised in that they contain 0.5 wt-% tellurium and/or tellurium compounds.

4. Particles according to Claim 3, characterised in that they contain additionally 2.2 wt-% $SiO_2$.

5. Particles according to one of Claims 1 to 4, characterised in that the lithium silicate utilised is lithium orthosilicate.

**Revendications**

1. Particule sensiblement sphérique en silicates de lithium dotée de caractéristiques mécaniques améliorées et d'un état de surface amélioré, caractérisée par le fait qu'elle contient en outre des quantités de tellure et/ou des composés de tellure, ces additions représentants jusqu'à 5 % en poids.

2. Particule selon la revendication 1, caractérisée par le fait qu'elle contient en outre jusqu'à 5 % en poids d'aluminium et/ou de composés d'aluminium et/ou de silicium et/ou de composés de silicium.

3. Particule selon la revendication 1 ou la revendication 2, caractérisée par le fait qu'elle contient 0,5 % en poids de tellure et/ou de composés de tellure.

4. Particule selon la revendication 3, caractérisée par le fait qu'elle contient en outre 2,2 % en poids de $SiO_2$.

5. Particule selon l'une des revendications 1 à 4, caractérisée par le fait que le silicate de lithium utilisé est de l'orthosilicate de lithium.

**Fig. 1**

Fig. 2

Fig. 3

Fig. 4

Fig. 5